# EUROPEAN PATENT SPECIFICATION

(11) **EP 4 560 823 B1**
(45) Date of publication and mention of the grant of the patent: **29.04.2026**
(21) Application number: 23843441.9
(22) Date of filing: 21.07.2023
(51) Int. Cl.: H01M 50/564, H01M 10/04, H01M 50/559, B26D 7/00, B26D 1/04, B26D 1/00, B26F 1/44, H01M 50/533, H01M 50/536

(54) **APPARATUS FOR MANUFACTURING SECONDARY BATTERY, METHOD FOR MANUFACTURING SECONDARY BATTERY USING THE SAME, AND SECONDARY BATTERY MANUFACTURED USING THE SAME**
VORRICHTUNG ZUR HERSTELLUNG EINER SEKUNDÄRBATTERIE, VERFAHREN ZUR HERSTELLUNG EINER SEKUNDÄRBATTERIE DAMIT UND DAMIT HERGESTELLTE SEKUNDÄRBATTERIE
APPAREIL DE FABRICATION DE BATTERIE SECONDAIRE, PROCÉDÉ DE FABRICATION DE BATTERIE SECONDAIRE L'UTILISANT, ET BATTERIE SECONDAIRE FABRIQUÉE À L'AIDE DE CEUX-CI

(30) Priority: 22.07.2022 KR 20220091361
(43) Date of publication of application: 28.05.2025
(73) Proprietor: LG Energy Solution, Ltd., Seoul 07335 (KR)
(72) Inventor: PARK, Yu Seon, Daejeon 34122 (KR); JEGAL, Jong Pil, Daejeon 34122 (KR)
(74) Representative: Goddar, Heinz J.
(86) International application number: PCT/KR2023/010614
(87) International publication number: WO 2024/019595

(56) References cited:
- WO-A1-2022/015022
- CN-A- 109 894 660
- JP-A- 2009 110 813
- KR-A- 20210 103 180
- KR-A- 20220 035 741
- KR-A- 20220 035 741
- KR-B1- 102 065 736

## Description

### TECHNICAL FIELD

The present application claims the benefit of the priority of Korean Patent Application Nos. 10-2022-0091361, filed on July 22, 2022, and 10-2023-0095316, filed on July 21, 2023.

The present invention relates to an apparatus for manufacturing secondary battery, a method for manufacturing a secondary battery using the same, and a secondary battery manufactured using the same, and more particularly, to an apparatus for manufacturing a secondary battery, which cuts an electrode tab of the secondary battery, a method for manufacturing a secondary battery using the same, and a secondary battery manufactured using the same.

### BACKGROUND ART

Batteries (cells) that generate electric energy through physical or chemical reaction to supply the generated electric energy to the outside are used when AC power to be supplied to the building is not obtained, or DC power is required according to the living environments surrounded by various electric and electronic devices.

Among such batteries, primary batteries and secondary batteries, which are chemical batteries using chemical reaction, are being generally used. Here, the primary battery is commonly referred to as a battery and is a consumable battery. In addition, secondary batteries are rechargeable batteries that are manufactured by using a material in a redox process between current and a substance is repeatable several times. When the reduction reaction is performed on the material by the current, power is charged, and when the oxidation reaction is performed on the material, power is discharged. Such the charging-discharging is repeatedly performed to generate electricity.

Such a secondary battery generally has a structure that includes an electrode assembly, in which electrodes and separators are alternately stacked, and an electrode tab attached to each of the electrodes. Here, the electrode tab is processed to be cut by a cutter, etc., and after the processing, the electrode tab is attached to the electrode by welding coupling or the like.

The electrode assembly as described above is accompanied by expansion due to an activation process, etc. Here, there is a problem that burr formed through the cutting processing from the electrode tab damages the electrode, resulting in pin holes or cracks in the electrode. Relevant state of the art is known from documents WO 2022/015022 A1 and KR 2022 0035741 A.

As a result, it is necessary to develop a technology to solve the above problems.

### DISCLOSURE OF THE INVENTION

### TECHNICAL PROBLEM

The present invention has been invented to solve the above problem, and an object of the present invention is to provide an apparatus for manufacturing a secondary battery, which manufactures an electrode tab capable of preventing an electrode from being damaged, a method for manufacturing a secondary battery using the same, and a secondary battery manufactured using the same.

### TECHNICAL SOLUTION

The present invention provides an apparatus for manufacturing a secondary battery, which comprises: an electrode assembly in which electrodes and separators are alternately stacked; and an electrode tab attached to each of the electrodes, the apparatus including: a cutter disposed at one side of the electrode tab to move toward the electrode tab so as to cut a portion to be cut of the electrode tab; and a fixing die provided to cross the cutter at the other side of the electrode tab, wherein the cutter includes: a pressing surface configured to press the electrode tab; and an inclined surface provided at a position corresponding to the portion to be cut and inclinedly extending away from the electrode tab from an end of the pressing surface.

An end of the inclined surface may have a shape that is concavely recessed inward.

The inclined surface may extend to be inclined at an angle of 30 degrees to 70 degrees.

One end of the fixing die may be provided at a position corresponding to the portion to be cut of the electrode tab and have a shape that convexly protrudes outward.

The apparatus may further include a transfer part coupled to the electrode tab below the electrode tab, wherein the fixing die may be provided above the electrode tab, and the cutter may be provided below the electrode tab to move upward.

The secondary battery may include a cylindrical secondary battery.

The present invention provides a method for manufacturing a secondary battery, which comprises: an electrode assembly in which electrodes and separators are alternately stacked; and an electrode tab attached to each of the electrodes, the method including: an electrode tab cutting process of cutting a portion to be cut of the electrode tab; and an electrode tab attaching process of attaching the electrode tab to the electrode, wherein, in the electrode tab cutting process, a cutter moves toward the electrode tab to cut the portion to be cut of the electrode tab, and the cutter includes: a pressing surface that presses the electrode tab; and an inclined surface provided at a position corresponding to the portion to be cut and inclinedly extending away from the electrode tab from an end of the pressing surface.

In the electrode tab cutting process, the cutter disposed below the electrode tab may move upward with respect to the electrode tab to cut the electrode tab, and in the electrode tab attaching process, the electrode tab may be attached to an upper side of the electrode.

A secondary battery according to the present invention includes: an electrode assembly in which electrodes and separators are alternately stacked; an electrode tab attached to each of the electrodes; and a battery case in which the electrode assembly and the electrode tab are accommodated, wherein a burr generated on an edge of the electrode tab due to cutting may protrude in a direction facing the battery case.

A corner of the electrode tab may be provided in a curved shape having a curvature radius on a plane.

The corner of the electrode tab having the curvature radius may be disposed on the electrode.

The curvature radius of the corner of the electrode tab may be greater than 1/2 of a width of the electrode tab.

The electrode assembly may be wound in a state in which the electrodes and the separators are sequentially stacked, and the battery case may have a cylindrical shape and is configured to accommodate the electrode assembly.

### ADVANTAGEOUS EFFECTS

The present invention may have the effect of reducing the protruding angle of the burr on the electrode tab to minimize the damage of the electrode due to the electrode tab by cutting the electrode tab using the cutter having the inclined surface extending to be inclined away from the electrode tab from the pressing surface that presses the electrode tab.

In addition, the present invention may have effect of forming the corner of the electrode tab in the rounded shape to minimize the damage of the electrode tab due to the electrode tab by cutting the electrode tab using the cutter of which the end of the inclined surface has the shape that is concavely recessed inward.

In addition, the present invention may include the transfer part configured to transfer the electrode to the lower side of the electrode tab. Thus, the cutter may be provided below the electrode tab to cut the electrode tab using the cutter that moves upward so that the burr protrudes from the electrode tab in the opposite direction of the electrode, i.e., the direction facing the battery case to minimize the damage of the electrode due to the electrode tab.

### BRIEF DESCRIPTION OF THE DRAWINGS

FIG. 1 is a perspective view illustrating an apparatus for manufacturing a secondary battery according to Embodiment 1 of the present invention.
FIG. 2 is a side cross-sectional view illustrating a cutter of the apparatus for manufacturing the secondary battery of FIG. 1 when viewed in a direction A-A.
FIG. 3a is a side cross-sectional view illustrating an electrode tab manufactured by the apparatus for manufacturing the secondary battery of FIG. 1.
FIG. 3b is a side cross-sectional view illustrating another electrode tab manufactured by the apparatus for manufacturing the secondary battery of FIG. 1.
FIG. 4 is a detailed plan view illustrating a cutter in the apparatus for manufacturing the secondary battery of FIG. 1.
FIG. 5 is a conceptual view illustrating a state in which the electrode tab manufactured by the apparatus for manufacturing the secondary battery of FIG. 1 is attached to an electrode.
FIG. 6a is a conceptual view illustrating a state in which the electrode tab manufactured by the apparatus for manufacturing the secondary battery of FIG. 1 is disposed between the electrode and a battery case.
FIG. 6b is a conceptual view illustrating a state in which an electrode tab manufactured by an apparatus for manufacturing a secondary battery according to the related art is disposed between an electrode and a battery case.
FIG. 7 is a flowchart illustrating an order in a method for manufacturing a secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Apparatus for manufacturing secondary battery

The present invention provides an apparatus 100 for manufacturing a secondary battery, which includes: an electrode assembly, in which electrodes 20 and separators (not shown) are alternately stacked; and an electrode tab 10 attached to the electrodes 20, the apparatus 100 including: a cutter 120 disposed at one side of the electrode 10 to move to the electrode tab 10 so as to cut a portion of the electrode tab 10, which is to be cut; and a fixing die provided to cross the cutter 120 at the other side of the electrode tab 10, and the cutter 120 includes: a pressing surface 121 that presses the electrode tab 10; and an inclined surface 122 disposed at a position corresponding to the portion to be cut and extending inclinedly away from the electrode tab from an end of the pressing surface 121.

Here, the electrode assembly may be configured so that the electrodes 20 and the separators (not shown) are alternately stacked and may have various structures. Specifically, the electrode assembly may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator.

The electrode assembly may be wound in a state in which the electrodes 20 and the separators are sequentially stacked and then be accommodated in a battery case 30 to be described later.

At least one or more electrode tabs 10 may be attached to each of the electrodes 20. Here, the electrode tab 10 may be connected to an electrode lead (not shown) that protrudes to the outside of the battery case 30, and thus, the electrode assembly inside the battery case 30 may be electrically connected to an external electric device or an external secondary battery. The electrode tab 10 may be coupled to the electrode 20 through laser welding, ultrasonic welding, resistance welding, etc.

In addition, the electrode tab 10 may be attached to the electrode 20 by welding, and thus, at least one or more welding areas a may be provided on the electrode tab 10 and the electrode 20. Here, the welding area a may be understood as an area on which deformation occurs in the electrode tab 10 or the electrode 20 during a process of pressing and/or heating the electrode tab 10 and the electrode 20 during the welding.

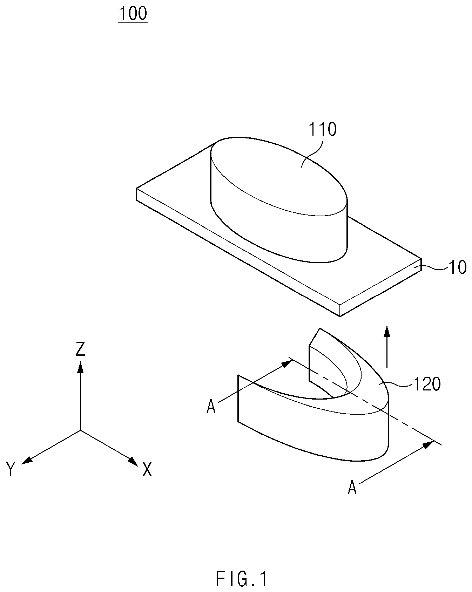

Before attaching the electrode tab 10 to the electrode 20, as illustrated in FIG. 1, the electrode tab 10 may be cut by the cutter 120 and then processed to have a size and shape desired by a user.

Specifically, the cutter 120 may be disposed at one side of the electrode tab 10 to move toward the electrode tab 10 and may cut a portion to be cut of the electrode tab 10. Here, the portion to be cut may be a portion of the electrode tab 10 that is cut and processed by the cutter 120 and may be understood as a portion corresponding to the cut portion of the electrode tab 10 on which a cutting process is performed.

In more detail, the cutter 120 may be disposed at one side of the electrode tab 10 to move toward the electrode tab 10 so as to process the electrode tab 10. For example, the cutter 120 may be disposed on either upper or lower side of the electrode tab 10 to move toward the electrode tab 10 .

The cutter 120 may have various structures.

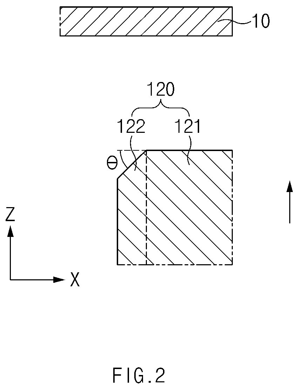

For example, as illustrated in FIG. 2, the cutter 120 may include: a pressing surface 121 that presses the electrode tab 10; and an inclined surface 122 that is provided at a position corresponding to the portion to be cut and extends inclinedly away from the electrode tab 10 from an end of the pressing surface 121. Here, FIG. 2 is a side cross-sectional view of the cutter 120, but notes that the electrode tab 10 is additionally illustrated above the cutter 120 to help understand in position and moving direction of the cutter 120.

Here, a dotted line expressed on the cutter 120 may be expressed to distinguish areas of the pressing surface 121 and the inclined surface 122 on a cross-section of the cutter 120, but note that this does not mean that the pressing surface 121 and the inclined surface 122 are separated from each other.

Here, the pressing surface 121 may be a surface provided at a position facing the electrode tab 10 on the cutter 120 to press one surface of the electrode tab 10 and may have various structures. For example, as illustrated in FIG. 2, the pressing surface 121 may have a structure that extends in a direction (direction parallel to an X-direction in FIG. 2) parallel to one surface of the electrode tab 10 to uniformly press the one surface of the electrode tab 10.

The inclined surface 122 may be provided at a position corresponding to the portion to be cut and may be configured to extend inclinedly away from the electrode tab 10 from the end of the pressing surface 121 and also may has various structures.

For example, as illustrated in FIG. 2, the inclined surface 122 may be provided to extend inclinedly so that a distance between the end of the pressing surface 121 and the electrode tab 10 (a Z-direction in FIG. 2) increases.

This inclined surface 122 may be provided at a position corresponding to the portion to be cut, and thus, when the electrode tab 10 is cut, formation of a burr generated by the cutting is generated at the cut portion of the electrode tab 10 and a protruding height of the burr may be minimized.

The inclined surface 122 may be provided to be inclined at various inclination angles θ from the pressing surface 121. However, since the protruding height of the burr generated at the cut portion of the electrode tab 10 increases in proportion to the inclination angle θ of the inclined surface 122, it is preferable that the inclination angle θ is less than a certain angle.

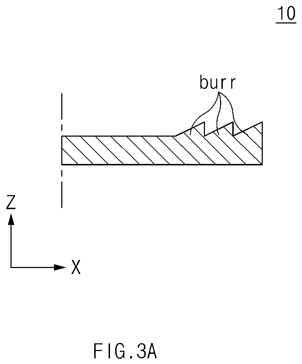

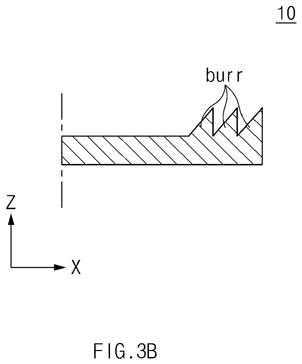

In more detail, FIGS. 3a and 3b illustrate electrode tabs 10 in which the inclined surface 122 is cut by the cutter 120 having different inclination angles θ. That is, the electrode tab 10 in FIG. 3a may be an electrode tab 10 provided by cutting the electrode tab 10 using the cutter 120 of which an inclination angle θ of the inclined surface 122 is 30 degrees, and the electrode tab 10 in FIG. 3b may be an electrode tab 10 provided by cutting the electrode tab 10 using the cutter 120 of which an inclination angle θ of the inclined surface 122 is 50 degrees. Referring to FIGS. 3a to 3b, it is seen that a protruding height of the burr of the electrode tab 10 in FIG. 3b is higher than that of the burr of the electrode tab 10 in FIG. 3a. Thus, it is seen that the inclination angle θ needs to be less than a certain angle.

However, even considering this structure, if the inclination angle θ is too small, a problem in which the processing of the inclined surface 122 is difficult may occur when manufacturing the cutter 120, and thus, the inclination angle θ may not be defined at a predetermined angle or more.

Thus, it may be desirable that the inclined surface 122 extend inclinedly at an angle of 30 degrees to 70 degrees from the pressing surface 121. This is because, as described above, when the inclination angle θ is less than 30 degrees, the processing of the inclined surface 122 may be difficult when manufacturing the cutter 120, and when the inclination angle θ exceeds 70 degrees, the protruding height of the burr may be too large to adversely affect quality of the secondary battery.

The inclined surface 122 may have various shapes.

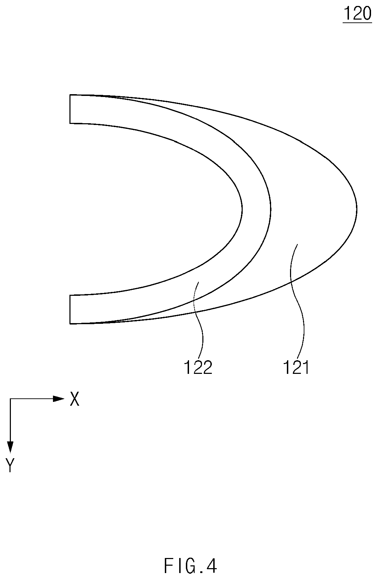

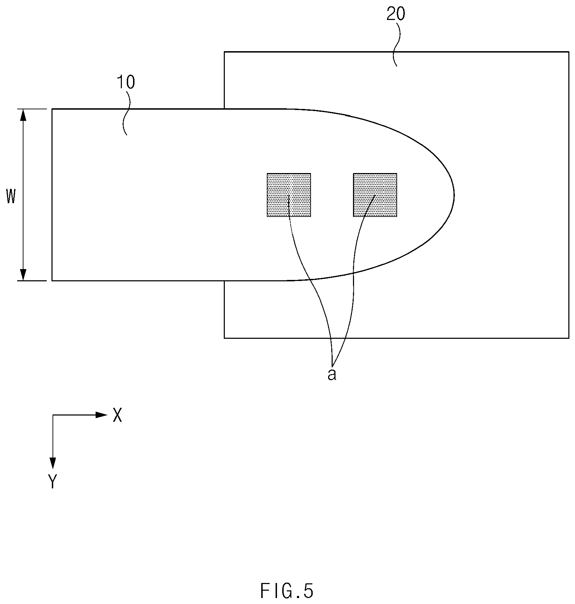

Here, an end of the inclined surface 122 may have a shape that is recessed concavely inward, as illustrated in FIG. 4. In this case, as illustrated in FIG. 5, a corner of the electrode tab 10 cut by the cutter 120 may not define a right angle, but may be provided in a curved shape having a curvature radius on a plane.

Thus, after the electrode tab 10 is attached to the electrode 20, even if the electrode assembly expands due to an activation process, etc., stress concentration at the corner of the electrode tab 10 may be alleviated to prevent the electrode 20 from being damaged.

The electrode tab 10 cut by the cutter 120 may be fixedly supported by the fixing die 110. Here, the fixing die 110 may be configured to be disposed to cross the cutter 120 at the other side of the electrode tab 10 and may have various configurations.

Specifically, the fixing die 110 may be disposed so as not to interfere with the cutter 120 at the other side of the electrode tab 10. In addition, the fixing die 110 may be understood as a configuration that fixes and supports a partial area of the electrode tab 10 so that when the electrode tab 10 is pressed by the cutter 120, the electrode tab 10 is easily cut along the portion to be cut.

Here, when the cutter 120 is disposed at one side of the electrode tab 10, the fixing die 110 may be disposed at the other side of the electrode tab 10. In this case, the fixing die 110 may be disposed either at the upper or lower side of the electrode tab 10.

The fixing die 110 may have various shapes.

For example, as described above, when the end of the inclined surface 122 of the cutter 120 has a shape that is concavely recessed inward, one end of the fixing die 110 may be disposed at a position corresponding to the portion to be cut of the electrode tab 10 and may have a shape that convexly protrudes outward.

Here, the convexly protruding shape of one end of the fixing die 110 may be provided to correspond to the concavely recessed shape of the end of the inclined surface 122 of the cutter 120. In this case, there is an advantage that a fracture surface generated by cutting the electrode tab 10 is provided smoothly by minimizing a clearance between the fixing die 110 and the cutter 120.

The apparatus 100 for manufacturing the secondary battery according to the present invention may further include a transfer part (not shown) that transfers the electrode 20 coupled to the electrode tab 10 to the lower side of the electrode tab 10. The transfer part (not shown) may have any configuration as long as the transfer part is capable of transferring the electrode 20 and may be configured as, for example, a conveyor belt.

In addition, the electrode tab 10 cut by the cutter 120 may move to the electrode 20 transferred by the transfer part (not shown). In other words, the electrode tab 10 may be cut by the cutter 120 and then move to the top surface of the electrode 20, which is transferred on the transfer part (not shown).

When the transfer part as described above is provided, the above-described fixing die 110 may be provided above the electrode tab 10, and the cutter 120 may be preferably provided below the electrode tab 10 to move upward.

This is because, as the transfer part transfers the electrode 20 to the lower side of the electrode tab 10, as illustrated in FIG. 5, the electrode tab 10 is attached to the upper side of the electrode 20. Here, when the cutter 120 moves upward from the lower side of the electrode tab 10 to cut the electrode tab 10, the burr generated on the edge of the electrode tab 10 may be provided upward.

Additionally, compared to a case in which the electrode 20 is welded to the top surface of the electrode tab 10 in a state in which the cut electrode tab 10 disposed, when the electrode tab is welded to the top surface of the electrode 20 in the state in which the electrode 20 disposed, it may be more efficient, and thus, it is preferable that the cutter 120 is provided below the electrode tab 10 to moves upward so that the electrode tab 10 is attached to the upper side of the electrode 20.

Specifically, the electrode 20 may be manufactured by applying an active material to the electrode plate made of a metal. Due to characteristics of the electrode 20, a size of the electrode 20 may be larger than that of the cut electrode tab 10, and a weight of the electrode 20 may be heavier than that of the cut electrode tab 10. Therefore, it is desirable to attach the electrode tab 10 to the top surface of the electrode 20 in the state in which the electrode 20 is disposed.

In addition, due to characteristics of the welding process, the welding may be performed by defining the welding area a on the top surface of the electrode tab 10 in the state in which the electrode tab 10 is disposed on the top surface of the electrode 20. Thus, it is more efficient that the welding is performed by pressing the bottom surface of the electrode tab 10 in the state in which the electrode tab 10 is disposed on the bottom surface of the electrode 20. Therefore, similarly, it is preferable that the cutter 120 is provided below the electrode tab 10 to move upward so that the electrode tab 10 is attached to the upper side of the electrode 20.

In this case, the burr generated due to the cutting on the electrode tab 10 may protrude in the opposite direction of the electrode 20 to prevent the electrode 20 from being damaged by the burr.

Specifically, the secondary battery manufactured by the apparatus 100 for manufacturing the secondary battery may include a cylindrical secondary battery, and due to manufacturing characteristics of the cylindrical secondary battery, the electrode 20 may be wound in the state in which the electrode tab 10 is welded to the electrode 20. That is, the electrode 20 may be provided in a jelly-roll shape and then be accommodated in the cylindrical battery can, and the burr of the electrode tab 10 may be disposed to face an inner surface of the battery can. In the state in which the electrode 20 having the jelly roll-shape, i.e., the electrode assembly is accommodated in the battery can, the activation process may be performed, and then, a top cap may cover an upper side of the battery can to manufacture the cylindrical secondary battery.

The electrode 20 may include a negative electrode connected to the inner surface of the battery can and having a negative polarity and a positive electrode connected to the top cap and having a positive polarity. In this case, the electrode 20 to which the cut electrode tab 10 is welded may be the negative electrode.

That is, in the state in which the electrode tab 10 is welded and coupled to the negative electrode so that the burr of the electrode tab 10 protrudes in the opposite direction of the negative electrode, the positive electrode and the negative electrode may be wound so that the burr of the electrode tab 10 faces the inner surface of the battery can, and then, the burr of the electrode tab 10 may be coupled to the inner surface of the battery can.

As a result, in the state in which the cutter 120 disposed at a lower side of the electrode tab 10 moves upward to generate the burr of the electrode tab 10 upward, the cut electrode tab 10 may be welded and coupled to the top surface of the electrode 20 disposed on the transfer part, and the electrode 20, i.e., the negative electrode may be wound to be accommodated in the battery can so that the burr of the electrode tab 10 faces outward, and thus, the burr of the electrode tab 10 may be coupled to the inner surface of the battery can rather than the electrode 20. Thus, the electrode 20 may not be damaged by the burr of the electrode tab 10.

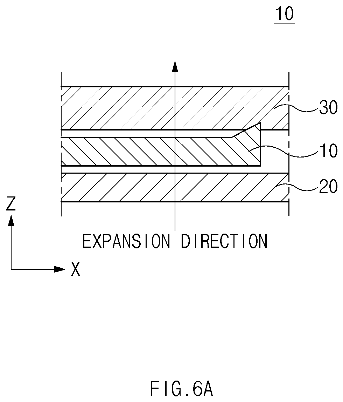

This may be explained in more detail with reference to FIGS. 6a to 6b.

Specifically, FIG. 6a is a view illustrating a state in which the electrode tab 10 is disposed at the upper side of the electrode 20, and the burr generated on the edge of the electrode tab 10 protrudes upward so that the burr is disposed in the direction facing the battery case 30, which is the opposite direction of the electrode 20. In this case, since the protruding direction of the burr is opposite to the electrode 20, the electrode 20 may not be damaged by the burr even if the electrode 20 is expanded.

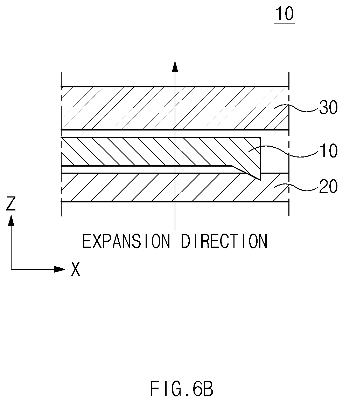

In addition, FIG. 6b is a view illustrating a state in which the electrode tab 10 is disposed at the upper side of the electrode 20, and the burr generated on the edge of the electrode tab 10 protrudes downward so that the burr is disposed in the direction facing the electrode 20. In this case, since the protruding direction of the burr faces the electrode 20, even if the electrode 20 is expanded, the problem in which the electrode 20 is damaged by the burr to deteriorate quality of the secondary battery may occur.

That is, in the present invention, when the electrode tab 10 is attached to the upper side of the electrode 20 as described above, the cutter 120 may be disposed below the electrode tab 10, and the cutter 120 may move upward to cut the electrode tab 10 so that the burr protrudes in the opposite direction of the electrode 20, thereby preventing the electrode 20 from being damaged.

When the electrode tab 10 is attached to the lower side of the electrode 20 as described above, the cutter 120 may be disposed above the electrode tab 10, and the cutter 120 may move downward to cut the electrode tab 10 so that the burr protrudes in the opposite direction of the electrode 20, thereby preventing the electrode 20 from being damaged.

### Method for manufacturing secondary battery

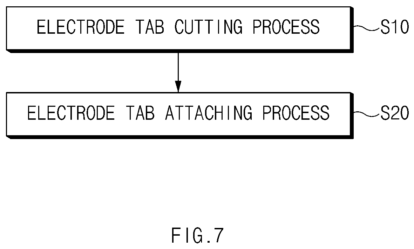

As illustrated in FIG. 7, the present invention provides a method for manufacturing a secondary battery, which includes: an electrode assembly in which electrodes 20 and separators are alternately stacked; and an electrode tab 10 attached to each of the electrodes 20, the method including: an electrode tab cutting process (S10) of cutting a portion to be cut of the electrode tab 10; and an electrode tab attaching process (S20) of attaching the electrode tab 10 to the electrode 20. In the electrode tab cutting process (S10), a cutter 120 moves toward the electrode tab 10 to cut the portion to be cut of the electrode tab 10, and the cutter 120 includes: a pressing surface 121 that presses the electrode tab 10; and an inclined surface provided at a position corresponding to the portion to be cut and inclinedly extending away from the electrode tab 10 from an end of the pressing surface.

Here, the electrode tab cutting process (S10) may be a process of cutting the portion to be cut of the electrode tab 10 and may be performed in various manners.

Specifically, the electrode tab cutting process (S10) may be performed by moving the cutter 120 toward the electrode tab 10 to cut the portion to be cut of the electrode tab 10.

In more detail, the electrode tab cutting process (S10) may be performed by moving the cutter 120 to the upper or lower side of the electrode tab 10 according to the positions of the cutter 120 and the electrode tab 10 to cut the electrode tab 10.

Here, in the electrode tab cutting process (S10), the positions of the cutter 120 and the electrode tab 10 and the moving direction of the cutter 120 may vary in consideration of the position at which the electrode tab 10 is attached to the electrode 20 in the electrode tab attaching process (S20) to be described later and the formation direction of the burr.

For example, when the electrode tab 10 is attached to the upper side of the electrode 20 in the electrode tab attaching process (S20) to be described later, the electrode tab cutting process (S10) may be performed while the cutter 120 disposed below the electrode tab 10 moves upward with respect to the electrode tab 10 to cut the electrode tab 10.

Here, the cutter 120 may include: a pressing surface 121 that presses the electrode tab 10; and an inclined surface 122 that is provided at a position corresponding to the portion to be cut and extends inclinedly away from the electrode tab 10 from an end of the pressing surface 121. Here, more specific contents of the cutter 120 will be replaced with the above-described contents.

In addition, the electrode tab attaching process S20 may be a process of attaching the electrode tab 10 to the electrode 20 and may be performed in various manners.

Specifically, the electrode tab attaching process S20 may be performed by attaching the electrode tab 10 to the electrode 20 through laser welding, ultrasonic welding, resistance welding, etc. Here, the electrode tab 10 may be attached to the upper or lower side of the electrode 20.

### Secondary battery

The present invention may provide a secondary battery which includes: an electrode assembly in which electrodes 20 and separators are alternately stacked; an electrode tab 10 attached to each of the electrodes 20; and a battery case 30 in which the electrode assembly and the electrode tab 10 are accommodated, and in which a burr generated due to cutting on an edge of the electrode tab 10 protrudes in a direction facing the battery case 30.

Here, specific details about the electrode 20 and the electrode tab 10 will be replaced with the above-described details. In addition, the secondary battery may be of various types, for example, a cylindrical secondary battery.

In addition, the battery case 30 may be configured to accommodate the electrode assembly and the electrode tab 10 and may have various structures. For example, the battery case 30 may have various shapes and materials such as a cylindrical shape, a prismatic shape, and a pouch shape.

The secondary battery may be a secondary battery manufactured by the above-described apparatus 100 for manufacturing the secondary battery and the method for manufacturing the secondary battery. Here, the electrode tab 10 may be cut by the above-described fixing die 110 and cutter 120.

Here, the secondary battery may have a structure in which the burr generated by the cutting processing on the edge of the electrode tab 10 is disposed in the opposite direction of the electrode 20, that is, in the direction facing the battery case 30, and thus, the damage of the electrode 20 due to the burr of the electrode tab 10 may be prevented from occurring.

In the present invention, the corner of the electrode tab 10 may be provided in a curved shape with a curvature radius on the plane. That is, the corner of the electrode tab 10 may have a rounded shape. As a result, stress concentrated at the corner of the electrode tab 10 may be alleviated.

Particularly, the corner of the electrode tab 10 having the curvature radius may be disposed on the electrode 20, and thus, the problem in which the corner of the electrode tab 10 tears the electrode 20 or damages the electrode 20 may be prevented to improve stability of the secondary battery.

The curvature radius of the corner of the electrode tab 10 may be variously provided. However, in order to relieve the stress concentration at the corner of the electrode tab 10, it may be preferable that the curvature radius of the corner of the electrode tab 10 is greater than 1/2 of a width W of the electrode tab 10. For example, when the width W of the electrode tab 10 mm is 40 mm, the curvature radius of the corner of the electrode tab 10 may be greater than 20 mm.

While Embodiments of the present invention have been described with reference to the specific embodiments, it will be apparent to those skilled in the art that various changes and modifications may be made without departing from the scope of the invention as defined in the following claims.

### [Description of the Symbols]

10: Electrode tab
20: Electrode
30: Battery case
100: Apparatus for manufacturing secondary battery
110: Fixing die
120: Cutter
121: Pressing surface
122: Inclined surface
S10: Electrode tab cutting process
S20; Electrode tab attaching process
θ: Inclined angle
W: Width of electrode tab
a: Welding area

## Claims

1. An apparatus for manufacturing a secondary battery, which comprises: an electrode assembly in which electrodes and separators are alternately stacked; and an electrode tab attached to each of the electrodes, the apparatus comprising:
a cutter disposed at one side of the electrode tab to move toward the electrode tab so as to cut a portion to be cut of the electrode tab; and
a fixing die provided to cross the cutter at the other side of the electrode tab,
wherein the cutter comprises:
a pressing surface configured to press the electrode tab; and
an inclined surface provided at a position corresponding to the portion to be cut and inclinedly extending away from the electrode tab from an end of the pressing surface.

2. The apparatus of claim 1, wherein an end of the inclined surface has a shape that is concavely recessed inward.

3. The apparatus of claim 1, wherein the inclined surface extends to be inclined at an angle of 30 degrees to 70 degrees.

4. The apparatus of claim 2, wherein one end of the fixing die is provided at a position corresponding to the portion to be cut of the electrode tab and has a shape that convexly protrudes outward.

5. The apparatus of claim 1, further comprising a transfer part coupled to the electrode tab below the electrode tab,
wherein the fixing die is provided above the electrode tab, and
the cutter is provided below the electrode tab to move upward.

6. The apparatus of claim 1, wherein the secondary battery comprises a cylindrical secondary battery.

7. A method for manufacturing a secondary battery, which comprises: an electrode assembly in which electrodes and separators are alternately stacked; and an electrode tab attached to each of the electrodes, the method comprising:
an electrode tab cutting process of cutting a portion to be cut of the electrode tab; and
an electrode tab attaching process of attaching the electrode tab to the electrode,
wherein, in the electrode tab cutting process, a cutter moves toward the electrode tab to cut the portion to be cut of the electrode tab, and
the cutter comprises:
a pressing surface that presses the electrode tab; and
an inclined surface provided at a position corresponding to the portion to be cut and inclinedly extending away from the electrode tab from an end of the pressing surface.

8. The method of claim 7, wherein, in the electrode tab cutting process, the cutter disposed below the electrode tab moves upward with respect to the electrode tab to cut the electrode tab, and
in the electrode tab attaching process, the electrode tab is attached to an upper side of the electrode.

9. A secondary battery comprising:
an electrode assembly in which electrodes and separators are alternately stacked;
an electrode tab attached to each of the electrodes; and
a battery case in which the electrode assembly and the electrode tab are accommodated,
wherein a burr generated on an edge of the electrode ta b due to cutting protrudes in a direction facing the battery case.

10. The secondary battery of claim 9, wherein a corner of the electrode tab is provided in a curved shape having a curvature radius on a plane.

11. The secondary battery of claim 10, wherein the corner of the electrode tab having the curvature radius is disposed on the electrode.

12. The secondary battery of claim 10, wherein the curvature radius of the corner of the electrode tab is greater than 1/2 of a width of the electrode tab.

13. The secondary battery of claim 9, wherein the electrode assembly is wound in a state in which the electrodes and the separators are sequentially stacked, and
the battery case has a cylindrical shape and is configured to accommodate the electrode assembly.

## Patentansprüche

1. Vorrichtung zum Herstellen einer Sekundärbatterie, die Folgendes aufweist: eine Elektrodenanordnung, in der Elektroden und Separatoren abwechselnd gestapelt sind; und eine Elektrodenlasche, die an jeder der Elektroden angebracht ist, wobei die Vorrichtung Folgendes aufweist:
ein Schneidwerkzeug, das an einer Seite der Elektrodenlasche angeordnet ist, um sich in Richtung der Elektrodenlasche zu bewegen, um einen zu schneidenden Abschnitt der Elektrodenlasche zu schneiden; und
ein Fixierwerkzeug, das vorgesehen ist, um das Schneidwerkzeug an der anderen Seite der Elektrodenlasche zu kreuzen,
wobei das Schneidwerkzeug Folgendes aufweist:
eine Pressfläche, die konfiguriert ist, um die Elektrodenlasche zu pressen; und
eine geneigte Fläche, die an einer Position vorgesehen ist, die dem zu schneidenden Abschnitt entspricht, und sich geneigt von einem Ende der Pressfläche weg von der Elektrodenlasche erstreckt.

2. Vorrichtung nach Anspruch 1, wobei ein Ende der geneigten Fläche eine Form aufweist, die konkav nach innen ausgespart ist.

3. Vorrichtung nach Anspruch 1, wobei sich die geneigte Fläche erstreckt, um in einem Winkel von 30 Grad bis 70 Grad geneigt zu sein.

4. Vorrichtung nach Anspruch 2, wobei ein Ende des Fixierwerkzeugs an einer Position vorgesehen ist, die dem zu schneidenden Abschnitt der Elektrodenlasche entspricht, und eine Form aufweist, die konvex nach außen vorsteht.

5. Vorrichtung nach Anspruch 1, die ferner ein Transferteil aufweist, das mit der Elektrodenlasche unter der Elektrodenlasche gekoppelt ist,
wobei das Fixierwerkzeug über der Elektrodenlasche vorgesehen ist, und
das Schneidwerkzeug unter der Elektrodenlasche vorgesehen ist, um sich nach oben zu bewegen.

6. Vorrichtung nach Anspruch 1, wobei die Sekundärbatterie eine zylindrische Sekundärbatterie aufweist.

7. Verfahren zum Herstellen einer Sekundärbatterie, die Folgendes aufweist: eine Elektrodenanordnung, in der Elektroden und Separatoren abwechselnd gestapelt sind; und eine Elektrodenlasche, die an jeder der Elektroden angebracht ist, wobei das Verfahren Folgendes aufweist:
einen Elektrodenlaschen-Schneidprozess des Schneidens eines zu schneidenden Abschnitts der Elektrodenlasche; und
einen Elektrodenlaschen-Anbringungsprozess des Anbringens der Elektrodenlasche an der Elektrode,
wobei sich in dem Elektrodenlaschen-Schneidprozess ein Schneidwerkzeug in Richtung der Elektrodenlasche bewegt, um den zu schneidenden Abschnitt der Elektrodenlasche zu schneiden, und
das Schneidwerkzeug Folgendes aufweist:
eine Pressfläche, die die Elektrodenlasche presst; und
eine geneigte Fläche, die an einer Position vorgesehen ist, die dem zu schneidenden Abschnitt entspricht, und sich geneigt von einem Ende der Pressfläche weg von der Elektrodenlasche erstreckt.

8. Verfahren nach Anspruch 7, wobei sich in dem Elektrodenlaschen-Schneidprozess das unter der Elektrodenlasche angeordnete Schneidwerkzeug relativ zu der Elektrodenlasche nach oben bewegt, um die Elektrodenlasche zu schneiden, und
in dem Elektrodenlaschen-Anbringungsprozess die Elektrodenlasche an einer Oberseite der Elektrode angebracht wird.

9. Sekundärbatterie, die Folgendes aufweist:
eine Elektrodenanordnung, in der Elektroden und Separatoren abwechselnd gestapelt sind;
eine Elektrodenlasche, die an jeder der Elektroden angebracht ist; und
ein Batteriegehäuse, in dem die Elektrodenanordnung und die Elektrodenlasche untergebracht sind,
wobei ein Schnittgrat, der an einem Rand der Elektrodenlasche aufgrund des Schneidens erzeugt wird, in einer Richtung vorsteht, die dem Batteriegehäuse zugewandt ist.

10. Sekundärbatterie nach Anspruch 9, wobei eine Ecke der Elektrodenlasche in einer gekrümmten Form mit einem Krümmungsradius auf einer Ebene vorgesehen ist.

11. Sekundärbatterie nach Anspruch 10, wobei die Ecke der Elektrodenlasche mit dem Krümmungsradius auf der Elektrode angeordnet ist.

12. Sekundärbatterie nach Anspruch 10, wobei der Krümmungsradius der Ecke der Elektrodenlasche größer als 1/2 einer Breite der Elektrodenlasche ist.

13. Sekundärbatterie nach Anspruch 9, wobei die Elektrodenanordnung in einem Zustand gewickelt ist, in dem die Elektroden und die Separatoren sequentiell gestapelt sind, und
das Batteriegehäuse eine zylindrische Form aufweist und konfiguriert ist, um die Elektrodenanordnung aufzunehmen.

## Revendications

1. Appareil pour la fabrication d'une batterie secondaire, comprenant : un ensemble d'électrodes, dans lequel des électrodes et des séparateurs sont empilés en alternance ; et une languette d'électrode fixée sur chacune des électrodes, l'appareil comprenant :
un dispositif de coupe disposé sur un côté de la languette d'électrode pour se déplacer vers la languette d'électrode de façon à couper une partie à couper de la languette d'électrode ; et
une matrice de fixation agencée de façon à croiser le dispositif de coupe de l'autre côté de la languette d'électrode,
le dispositif de coupe comprenant :
une surface de pressage configurée pour presser la languette d'électrode ; et
une surface inclinée agencée dans une position correspondant à la partie à couper, et s'étendant de façon inclinée dans le sens opposé à la languette d'électrode depuis un bout de la surface de pressage.

2. Appareil selon la revendication 1, un bout de la surface inclinée ayant une forme évidée de façon concave vers l'intérieur.

3. Appareil selon la revendication 1, la surface inclinée s'étendant pour être inclinée à un angle de 30 degrés à 70 degrés.

4. Appareil selon la revendication 2, un bout de la matrice de fixation étant agencé dans une position correspondant à la partie à couper de la languette d'électrode, et ayant la forme d'une saillie convexe vers l'extérieur.

5. Appareil selon la revendication 1, comprenant en outre un élément de transfert couplé à la languette d'électrode, sous la languette d'électrode,
la matrice de fixation étant agencée au-dessus de la languette d'électrode, et
le dispositif de coupe étant agencé sous la languette d'électrode, pour se déplacer vers le haut.

6. Appareil selon la revendication 1, la batterie secondaire comprenant une batterie secondaire cylindrique.

7. Procédé de fabrication d'une batterie secondaire, comprenant : un ensemble d'électrodes, dans lequel des électrodes et des séparateurs sont empilés en alternance ; et une languette d'électrode fixée sur chacune des électrodes, le procédé comprenant :
un processus de coupe de languette d'électrode comportant la coupe d'une partie à couper de la languette d'électrode ; et
un processus de fixation d'une languette d'électrode, comportant la fixation de la languette d'électrode à l'électrode,
de sorte que dans le processus de coupe de la languette d'électrode, un dispositif de coupe se déplace vers la languette d'électrode pour couper la partie à couper de la languette d'électrode, et
le dispositif de coupe comprenant :
une surface de pressage pressant la languette d'électrode ; et
une surface inclinée agencée dans une position correspondant à la partie à couper, et s'étendant de façon inclinée dans le sens opposé à la languette d'électrode depuis un bout de la surface de pressage.

8. Procédé selon la revendication 7, dans lequel, dans le processus de coupe de languette d'électrode, le dispositif de coupe disposé sous la languette d'électrode se déplace vers le haut relativement à la languette d'électrode pour couper la languette d'électrode, et
dans le processus de fixation de la languette d'électrode, la languette d'électrode est fixée sur un côté supérieur de l'électrode.

9. Batterie secondaire comprenant :
un ensemble d'électrodes dans lequel des électrodes et des séparateurs sont empilés en alternance ;
une languette d'électrode fixée sur chacune des électrodes ; et
un boîtier de batterie dans lequel sont installés l'ensemble d'électrodes et la languette d'électrode,
une bavure produite sur un bord de la languette d'électrode en raison de la coupe faisant saillie dans une direction face au boîtier de batterie.

10. Batterie secondaire selon la revendication 9, le coin de la languette d'électrode présentant le rayon de courbure étant agencé sur l'électrode.

11. Batterie secondaire selon la revendication 10, le coin de la languette d'électrode présentant le rayon de courbure étant disposé sur l'électrode.

12. Batterie secondaire selon la revendication 10, le rayon de courbure du coin de la languette d'électrode étant supérieur à ½ d'une largeur de la languette d'électrode.

13. Batterie secondaire selon la revendication 9, l'ensemble d'électrodes étant enroulé dans un état dans lequel les électrodes et les séparateurs sont empilés en séquence, et
le boîtier de batterie ayant une forme cylindrique, et étant configuré pour recevoir l'ensemble d'électrodes.
